# EUROPÄISCHE PATENTANMELDUNG

(11) **EP 0 675 294 A1**
(43) Veröffentlichungstag der Anmeldung: **04.10.1995**
(21) Anmeldenummer: 95100827.5
(22) Anmeldetag: 23.01.1995
(51) Int. Cl.: F16B 19/00, F16B 13/08

(54) **Nagel mit einem Spreizbereich**

(30) Priorität: 28.03.1994 DE 4410793
(71) Anmelder: fischerwerke Artur Fischer GmbH & Co. KG, D-72178 Waldachtal (DE)
(72) Erfinder: Fischer, Artur, Prof. Dr. h.c., D-72178 Waldachtal (DE)

(57) **Zusammenfassung**

Es wird ein Nagel mit einem Spreizbereich (3) vorgeschlagen, der durch einen Kerbvorgang nach außen gewölbte Spreizschenkel (9, 10) besitzt. Zwischen den Spreizschenkeln (9, 10) befindet sich eine Längskerbe (8), in der ein Keil (20) einliegt, dessen Oberkante (21) über den Schaft (1) hinausragt. Der Keil (20) liegt auf einem zur Nagelstirnseite (5) ansteigenden Kerbengrund auf.

## Beschreibung

Die Erfindung betrifft einen Nagel mit einem Spreizbereich gemäß Oberbegriff des Anspruchs 1.

Aus der DE 33 45 331 A1 ist ein als Nagel ausgebildetes Befestigungselement bekannt, das im Bereich seiner vorderen Nagelstirnseite einen Spreizbereich hat, der von zwei im Abstand verlaufenden, nach außen gewölbten Schenkeln gebildet wird. Die Verankerung eines solchen Befestigungselements erfolgt in der Weise, daß dessen Schaft in ein vorgebohrtes Bohrloch eines Mauerwerks oder dgl. eingeschlagen wird. Beim Eintreiben des Schafts in das Bohrloch werden Spreizschenkel von der Bohrlochwandung nach innen zusammengepreßt, wobei durch eine zwischen den Spreizschenkeln befindliche Einlage ein erhöhter Druck von den Spreizschenkeln gegen die Bohrlochwandung erzeugt werden kann. Nach dem Eintreiben werden die Spreizschenkel des Befestgigungselements durch die plastische und/oder elastische Rückstellkraft der Einlage gegen die Bohrlochwandung gepreßt, wodurch eine entsprechend hohe Haltekraft erreicht wird. Allerdings ist aufgrund der Einlage der Eintreibwiderstand des bekannten Nagels sehr hoch.

Der Erfindung liegt die Aufgabe zugrunde, einen Nagel mit einem Spreizbereich zu schaffen, der einerseits problemlos in ein Bohrloch eines Mauerwerks einsetzbar ist und hohe Haltewerte aufweist und gleichzeitig eine Nachspreizung ermöglicht.

Die Lösung dieser Aufgabe erhält man durch die im Anspruch 1 angegebenen Merkmale. Durch einen in eine Längskerbe des Schaftes eingesetzten Keil wird erreicht, daß dieser sich im Bohrloch mit der Bohrlochwandung verspannt. Tritt nun eine Bohrlocherweiterung in Folge einer Rißbildung im Mauerwerk auf, so bewirkt ein geringfügig aus dem Bohrloch gezogener Nagel, daß der ortsfest im Bohrloch verspannte Keil von dem ansteigenden Kerbengrund der Längskerbe verstärkt gegen die Bohrlochwandung gedrückt wird. Der Nagel verspannt sich dadurch wieder fest im Bohrloch, so daß hier von einem Nagel mit Nachspreizverhalten gesprochen werden kann.

Die am Schaft überstehende Oberkante des Keils ist vorzugsweise gezahnt, da Versuche ergeben haben, daß eine solche Verzahnung ein optimales Nachspreizverhalten ergibt.

Damit der Keil beim Einschlagen des Nagels in ein Bohrloch eines Mauerwerks nicht nach außen gegen die Bohrlochwandung gedrückt wird, ist ein Anschlag an dem dem Nagelkopf zugewandten Ende der Längskerbe vorgesehen, an dem der Keil in seiner tiefsten Position anliegt.

Weiterhin kann ein Halteelement den Keil lösbar in der Längskerbe vor dem Einschlagen des Nagels festhalten, damit der Keil nicht unbeabsichtigt aus der Längskerbe herausfällt. Als Halteelemente können seitliche Einprägungen am Rand der Längskerbe dienen, die eine reibschlüssige Verbindung zum eingelegten Keil herstellen.

In Verbindung mit den seitlich abstehenden Spreizschenkeln ergeben sich für den mit einem Keil bestückten Nagel optimale Haltewerte, wobei der Nagel auch in Problemzonen hohe Sicherheitsreserven aufweist. Die seitlich abstehenden Spreizschenkel werden beim Einschlagen des Nagels in ein Bohrloch durch plastische und elastische Verformung nach innen gedrückt und bilden damit einen Reibschluß mit der Bohrlochwandung. Aufgrund des elastischen und plastischen Verformungsanteils des Spreizbereichs ergeben sich bereits dadurch hohe Haltewerte. Durch den elastischen Verformungsanteil ist der Nagel auch in der Lage, eine Bohrlocherweiterung, beispielsweise durch Rißbildung, ohne Längsverschiebung im Bohrloch auszugleichen. Sollte aufgrund einer Rißbildung in Verbindung mit hohen Zugbelastungen eine Verschiebung des Nagels auftreten, so greift der am Schaft überstehende Keil an der Bohrlochwandung an und wird mit zunehmender Längsverschiebung des Nagels immer stärker gegen die Bohrlochwandung gepreßt, bis der Nagel wieder absolut fest im Bohrloch gehalten wird.

Die Spreizschenkel sind vorzugsweise durch Aufkerbung des geraden Schaftes symmetrisch zur Längsachse des Schaftes nach außen gewölbt und es besteht ein fließender Übergang an beiden Enden des Spreizbereichs zu den geraden Schaftabschnitten. Dabei ist es besonders vorteilhaft, die Mantelfläche der Spreizschenkel im Querschnitt annähernd kreisrund auszubilden, und zwar mit geringfügig größerem Durchmesser als der Schaftdurchmesser. Die Rundung im Spreizbereich entspricht somit annähernd der Rundung des Schaftes und der Bohrlochwandung, wodurch auch im Spreizbereich eine gleichmäßige, flächige Anlage an der Bohrlochwandung erreicht wird. Durch Abflachungen der Längskanten der Spreizschenkel wird das Einbiegen der Spreizschenkel beim Einschlagen des Nagels in das Bohrloch erleichtert.

Die Längskerbe kann einen U-förmigen Querschnitt haben, wobei der eingesetzte Keil ebenfalls mit einem U-förmigen Profil in der sich über den Spreizbereich hinaus erstreckenden Längskerbe einliegt. In dem Bereich, wo die Spreizschenkel nach außen am Schaft überstehen, besteht zwischen Keil und der Innenwandung der Spreizschenkel ein Freiraum, damit sich die Spreizschenkel elastisch zusammendrücken lassen.

In einer weiteren Ausgestaltung der Erfindung kann der Spreizbereich des Nagels mit einer im Profil dreiecksförmigen Längsrippe versehen sein, die gegenüber der Längskerbe angeordnet ist. Mit dieser über den Außenumfang des Spreizbereichs überstehende Längsrippe wird zusätzlich zu den beiden Spreizschenkeln eine weitere Anlage im Bohrloch erreicht, so daß einerseits aufgrund der im Spreizbereich verteilten äußeren Abstützung ein Zentriereffekt entsteht und andererseits eine höhere Verpressung der Spreizschenkel und insbesondere des in der Längskerbe einliegenden Keils erreicht wird. Bohrlochtoleranzen werden durch die Längsrippe ebenfalls besser ausgeglichen. Bei engeren Bohrlöchern gräbt sich die Längsrippe mehr und bei weiteren Bohrlöchern weniger in die Wandung des Bohrloches ein, so daß weitgehend unabhängig vom Bohrlochdurchmesser eine gleichbleibende Reibung des Spreizbereiches erzeugt wird.

Um das Einführen und Einschlagen des Nagels mit Längsrippe in das Bohrloch zu erleichtern, ist es zweckmäßig, daß die Längsrippe in einem Abstand zur vorderen Nagelstirnseite in einer Zuspitzung ausläuft.

Die Erfindung wird nachfolgend anhand eines in der Zeichnung dargestellten Ausführungsbeispiels näher erläutert.

Es zeigen:
- Figur 1: einen Nagel mit in einer Längskerbe seines Spreizbereichs einliegendem Keil,
- Figur 2: eine Draufsicht auf die vordere Nagelstirnseite des Nagels von Figur 1 und
- Figur 3: einen Längsschnitt des Nagels von Figur 1.

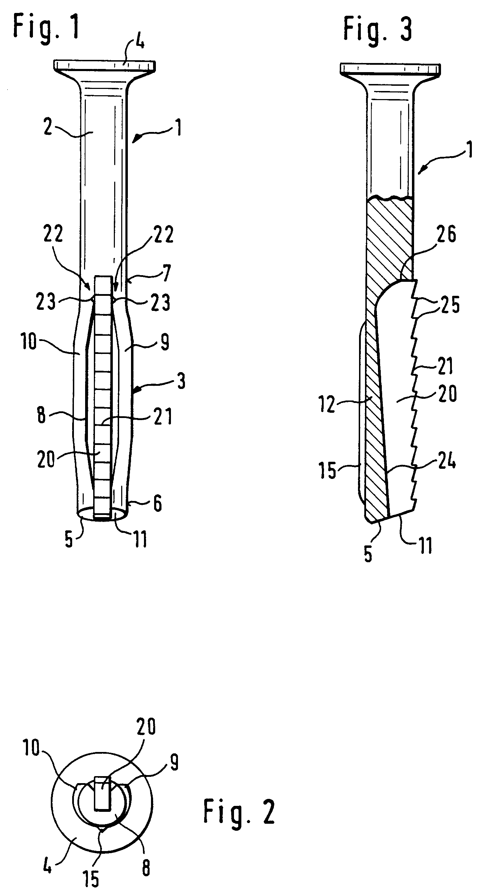

Der in Figur 1 dargestellte Nagel 1 hat einen Schaft 2 mit einem Spreizbereich 3 und einen Nagelkopf 4. Der Spreizbereich ist geringfügig von der vorderen Nagelstirnseite 5 abgesetzt, so daß zwischen dieser und dem Spreizbereich 3 ein gerader Schaftabschnitt 6 verbleibt. Ein längerer gerader Schaftabschnitt 7 erstreckt sich zwischen Spreizbereich 3 und Nagelkopf 4.

Der aus Metall hergestellte Nagel 1 ist durch einen Kerbvorgang mittels eines Kerbwerkzeugs im Spreizbereich 3 aufgekerbt, so daß eine Längskerbe 8 mit U-förmigem Querschnitt entsteht. Die Längskerbe 8 wird von seitlichen Spreizschenkeln 9, 10 begrenzt, die nach außen gewölbt am Schaft 2 überstehen. An der Nagelstirnseite 5 besitzt der Nagel 1 eine Schräge 11.

In der Längskerbe 8 liegt ein Keil 20 ein, der an der sichtbaren Oberkante 21 gezahnt ist. Damit der Keil 20 nicht unbeabsichtigt aus der Längskerbe 8 herausfällt, sind an dem Kerbenrand 22 gegenüberliegende Ausprägungen 23 am Schaft 2 vorhanden. Die Ausprägungen 23 stellen Halteelemente für den Keil 20 dar und klemmen diesen lösbar in der Längskerbe 8 fest.

In Figur 2 ist die U-förmige Aufkerbung der Längskerbe 8 erkennbar, in der der Keil 20 einliegt. An der dem Keil 20 gegenüberliegenden Seite des Schaftes 1 befindet sich eine Längsrippe 15, die sich zur Nagelstirnseite 5 hin verjüngt, wie dies in Figur 3 ersichtlich ist.

In der Darstellung gemäß Figur 3 ist erkennbar, daß die U-förmige Längskerbe einen zur Nagelstirnseite 5 ansteigenden Kerbengrund 24 hat. Der in der Längskerbe 8 einliegende Keil 20 verjüngt sich entsprechend in Richtung Nagelstirnseite 5, so daß er mit an seiner Oberkante 21 ausgeprägten Zähnen 25 gleichmäßig am Schaft 1 übersteht. An dem der Stirnseite 5 gegenüberliegenden Ende der Längskerbe 8 besitzt diese einen Anschlag 26, an dem sich der Keil 20 beim Einschlagen des Nagels 1 abstützt.

## Patentansprüche

1. Nagel mit einem im Abstand von der vorderen Nagelstirnseite ausgebildeten Spreizbereich, an dessen Schaft im Spreizbereich zwei gewölbte Spreizschenkel seitlich überstehen, zwischen denen im Schaft ein Freiraum verläuft und die an beiden Enden des Spreizbereichs in gerade Schaftabschnitte übergehen, **dadurch gekennzeichnet**, daß der Freiraum als Längskerbe (8) ausgebildet ist, die von dem vor dem Spreizbereich liegenden geraden Schaftabschnitt (7) ausgeht und zur vorderen Nagelstirnseite (5) verläuft, daß der Kerbengrund (24) der Längskerbe (8) in Richtung Nagelstirnseite (5) ansteigt, und daß ein Heil (20) in der Längskerbe (8) auf dem Kerbengrund (24) aufliegt, dessen Oberkante (21) den Schaft (2) geringfügig überragt und der in Richtung der Nagelstirnseite (5) entlang des ansteigenden Kerbengrundes (24) verschiebbar ist.

2. Nagel nach Anspruch 1, **dadurch gekennzeichnet**, daß die Oberkante (21) des Keils (20) gezahnt ist.

3. Nagel nach Anspruch 1, **dadurch gekennzeichnet**, daß der Keil (20) an dem der Nagelstirnseite (5) abgewandten Ende der Längskerbe (8) an einem Anschlag (26) anliegt.

4. Nagel nach Anspruch 1**, dadurch gekennzeichnet**, daß an dem Keil (20) wenigstens ein Halteelement (23) angreift, welches den Keil (20) lösbar in der Längskerbe (8) festhält.

5. Nagel nach Anspruch 1, **dadurch gekennzeichnet**, daß die Spreizschenkel (9, 10) durch Aufkerbung des geraden Schaftes (2) symmetrisch zur Längsachse des Schaftes nach außen gewölbt sind und ein fließender Übergang an beiden Enden des Spreizbereichs (3) zu den geraden Schaftabschnitten (6, 7) vorhanden ist.

6. Nagel nach Anspruch 5, **dadurch gekennzeichnet**, daß der Spreizbereich (3) im Querschnitt annähernd kreisförmig gerundet ist, und daß die Spreizschenkel (9, 10) an ihren Längskanten abgeflacht sind.

7. Nagel nach Anspruch 1, **dadurch gekennzeichnet**, daß die Längskerbe (8) als U-förmige Längsnut ausgebildet ist.

8. Nagel nach Anspruch 1, **dadurch gekennzeichnet**, daß der Spreizbereich (3) des Nagels (1) gegenüber der Längskerbe (8) mit einer im Profil dreiecksförmigen Längsrippe (15) versehen ist.

9. Nagel nach Anspruch 8, **dadurch gekennzeichnet**, daß die Längsrippe (15) in einem Abstand zur vorderen Nagelstirnseite (5) sich verjüngend ausläuft.
